# EUROPEAN PATENT APPLICATION

(11) **EP 0 692 546 A1**
(43) Date of publication of application: **17.01.1996**
(21) Application number: 95201851.3
(22) Date of filing: 05.07.1995
(51) Int. Cl.: C22C 1/08, C25D 1/08

(54) **Foam product**

(30) Priority: 13.07.1994 NL 9401159
(71) Applicant: STORK SCREENS B.V., NL-5831 AT Boxmeer (NL)
(72) Inventor: Pruyn, Wilhelmus Aloysius, NL-5831 GL Boxmeer (NL)
(74) Representative: Bakkum, Ruben Joseph

(57) **Abstract**

Foam product, at least comprising a metal foam (1), and handling means which can be in the form of one or more local increases (5, 6) in the wall thickness of the pores (3) of the metal foam (1), or in the form of one or more local fillings (9) of the pores (5) of the metal foam with a filling material which is essentially solid after application.

## Description

The present invention relates to a foam product, at least comprising a metal foam.

Metal foams are generally known and can be manufactured in many different ways. Examples of manufacturing methods are:
- forming gas bubbles in a molten metal mass;
- applying a metal layer to a base foam, following which the base foam may be removed if desired. In this connection reference is made to EP-B-0 151 064.

Such metal foams are used for many different applications, such as electrode material, sound-insulating material, catalyst (carrier) material, reactor packing material, filter material, filter carrier material, material for electromagnetic screening, material for selective cleansing of electrolytic baths or waste flows therefrom, electrode carrier material, heat-insulating material, fuel-cell composite material and/or construction material.

In all these applications the foam product must be handled after manufacture while being prepared for the application concerned. However, metal foams are quite susceptible to deformation or other damage from the effects of external forces. For use, the foam material is generally packed loose in a container or clamped between certain means. In this connection reference is made to NL-A-9102117 of Applicants, which discloses a metal foam with which a laminate of considerable inherent strength is manufactured by using one or more perforated metal sheets. However, the problem encountered when handling the metal foam is not solved, since the foam can still be crushed, for example, during handling. This can lead to closing of the pores or other damage, which is, of course, undesirable. The object of the present invention is to provide a foam product comprising at least a metal foam which does not have the abovementioned disadvantages, and to this end the invention is characterized in that said foam product comprises handling means. The presence of handling means makes it possible to handle the foam product less carefully, and also to fix it in a more reliable way, irrespective of the application, without damaging the foam product during handling.

The handling means are preferably in the form of one or more local increases in the wall thickness of the pores.

In another preferred embodiment the pores are filled locally with a material which is essentially solid after application.

Increasing the wall thickness locally ensures that the foam product is considerably reinforced locally, so that said product can easily be taken hold of at that point and fixed. Such thickness increases can be very local, but they can also cover larger areas, for example thickened strips along edges of the foam material.

In particular, the wall thickness of the pores at the position of the thickness increase is at least twice the wall thickness of the pores of the metal foam outside the thickness increase.

Although the material of the thickness increases is not particularly limited, it is preferably a metal.

It is particularly advantageous for both the metal foam and the thickness increases to be of nickel.

Where the pores are filled locally with essentially solid material, it is preferable to select for this purpose a material which is liquid or deformable during application, and which can be hardened or can set otherwise after application.

Examples of such materials which are preferable for this application are thermosetting plastics, photopolymerizable plastics, water glass, a molten metal mass and the like. Molten metal masses comprise e.g. hot dip galvanizing metal masses and solder.

One or more layers of a coating material are advantageously present on the metal foam, which coating material is selected in particular from a metal, an oxide, a ceramic material, a plastic or an organic or inorganic salt.

As metals, iron, zinc, copper, nickel, silver, tin and palladium may be mentioned. Suitable oxides are, for example, silicon oxide, titanium oxide, molybdenum oxide and the like. Examples of ceramic materials are nitrides, carbides, silicides, beryllides and the like.

Plastics can be any desired plastics which can be deposited on the inner surface of a foam. Organic and inorganic salts are those salts which have, for example, a catalytic effect or can react with a medium flowing through the foam product. The abovementioned materials can be freely selected by anyone.

The metal foam is not particularly limited according to the invention, and can be a full metal foam in the case of which the carrier material has been removed, or a metal foam in the case of which the carrier foam material is still present. The above depends on the application concerned.

Where the metal foam comprises a thickness increase consisting of a metal, it is preferable to produce at least this thickness increase by means of electroplating techniques, using an electrolytic bath. However, it will be clear that a metal thickness increase can also be produced by an electroless technique. The advantage of the metal thickness increase is that the pores do not necessarily have to be completely closed at the position of the handling means.

The invention will be explained in greater detail below with reference to the appended drawing, in which:
- Fig. 1 shows a diagrammatic view of a part of a full metal foam according to the prior art;
- Fig. 2 shows the same metal foam in sheet form, but provided locally with thickness increases according to the invention;
- Fig. 3 shows the metal foam according to Fig. 1 in sheet form, filled locally with a solid material.

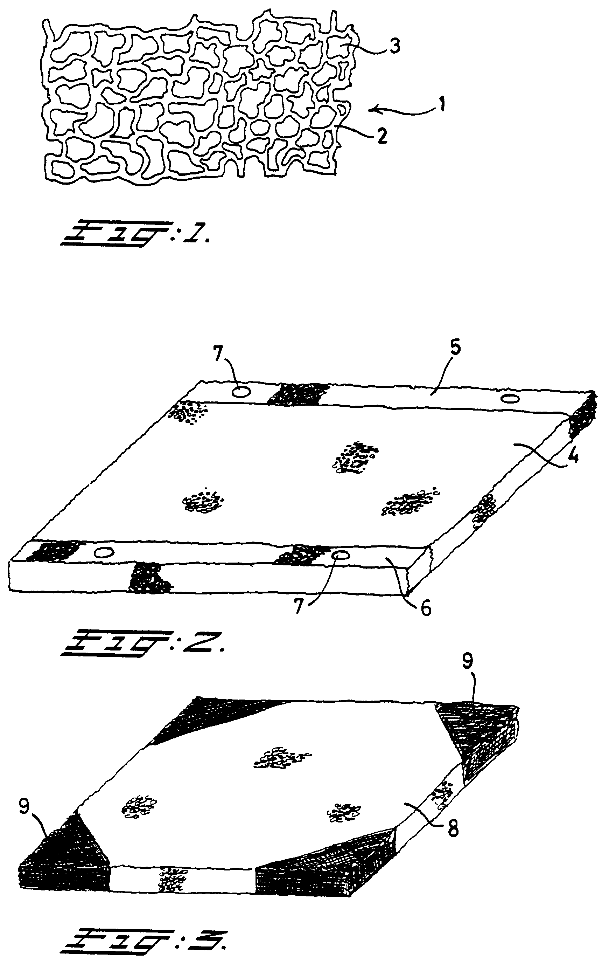

Fig. 1 shows a nickel foam according to the prior art, indicated diagrammatically by 1. The walls of the metal foam are indicated by 2, while the pores are indicated by reference number 3. This figure is only a partional cross-sectional view, so the foam extends in all directions.

In Fig. 2 the nickel foam material of Fig. 1 is shown in sheet form, the nickel foam being indicated by 4, and reference numbers 5 and 6 indicating strip-shaped edge areas in which the walls of the nickel foam are additionally thickened with nickel, so that the sheet material is easily handled there. Fixing holes 7 are also shown, by means of which holes foam can be fixed for a particular application.

Finally, Fig. 3 shows a nickel foam 8, which is filled at the corners with a thermosetting epoxy resin. Such a sheet material can be clamped at the corners, or can be handled there. There are no fixing holes present here, but such holes could be made in the corner pieces 9.

It will be clear that on the basis of the above description many embodiments of the handling means according to the invention will be obvious to the person skilled in the art, and differently shaped regions could be provided with thickness increases or filled. It is also possible, for example, to apply fillings locally at a distance from the edge areas, in order to provide reinforcements for fixing holes or the like.

## Claims

1. Foam product, at least comprising a metal foam, **characterized in that** the foam product is provided with handling means.

2. Foam product according to claim 1, **characterized in that** the handling means are in the form of one or more local increases (5, 6) in the wall thickness of the pores (3) of the metal foam (1).

3. Foam product according to claim 1**, characterized in that** the handling means are in the form of one or more local fillings (9) of the pores (5) of the metal foam with a filling material which is essentially solid after application.

4. Foam product according to claim 2, **characterized in that** the wall thickness of the pores (3) at the position of the thickness increases (5, 6) is at least twice the wall thickness of the pores of the metal foam (1) outside the thickness increases (5, 6).

5. Foam product according to one or more of the preceding claims, **characterized in that** the metal foam (1) and the thickness increases (5, 6) are of nickel.

6. Foam product according to claim 3, **characterized in that** the filling material is a material which is liquid or deformable during application, and which sets or can be hardened after application.

7. Foam product according to claim 6, **characterized in that** the filling material is selected from thermosetting plastic, photopolymerizable plastic, water glass, or molten metal mass.

8. Foam product according to one or more of claims 1 - 7, **characterized in that** one or more layers of a coating material are present on the metal foam.

9. Foam product according to claim 8, **characterized in that** the coating material is selected from a metal, an oxide, a ceramic material, a plastic or an organic or inorganic salt.
